# EUROPÄISCHE PATENTANMELDUNG

(11) **EP 2 113 961 A1**
(43) Veröffentlichungstag der Anmeldung: **04.11.2009**
(21) Anmeldenummer: 09005982.5
(22) Anmeldetag: 30.04.2009
(51) Int. Cl.: H01Q 1/12, H01Q 1/22, H01Q 7/00, G08C 17/04, H01F 38/18

(54) **Rotorantennenring**

(30) Priorität: 30.04.2008 DE 102008021773
(71) Anmelder: Hottinger Baldwin Messtechnik GmbH, 64293 Darmstadt (DE)
(72) Erfinder: Würfl, Norbert, 63834 Sulzbach (DE); Nold, Werner, 64560 Riedstadt (DE)
(74) Vertreter: Behrens, Helmut

(57) **Zusammenfassung**

Die Erfindung betrifft einen Rotorantennenring für ein induktives Telemetriesystem zur Messwert- und Messenergieübertragung zwischen einem stationären Antennenteil und einem rotierbaren Messwertaufnehmer. Dabei besteht der Rotorantennenring aus einem metallischen Trägerring (1) mit einer Nut (3) und einer darin angeordneten Induktionsspule (4), wobei der Trägerring (1) an einen rotierbaren Messwertaufnehmer befestigbar ist. Der Rotorantennenring ist **dadurch gekennzeichnet, dass** der Trägerring (1) als ein kreisrunder, einteiliger massiver Metallring ausgebildet ist, in dessen äußerer Mantelfläche (2) eine umlaufende sich radial nach innen verbreiternde Nut (3) eingelassen ist. Dabei ist zwischen zwei Wicklungslagen (6, 7) eines vorimprägnierten Glasfasergewebebandes die Induktionsspule (4) eingeschmolzen.

## Beschreibung

Die Erfindung betrifft einen Rotorantennenring für ein induktives Telemetriesystem zur Messerenergie- und Messwertübertragung nach dem Oberbegriff des Patentanspruchs 1 sowie ein Verfahren zur Herstellung eines Rotorantennenrings nach dem Oberbegriff des Patentanspruchs 4.

An rotierenden Maschinen ist es häufig notwendig während des Betriebes mit geeigneten Aufnehmern rotierende Geräteteile zu überwachen oder daran belastungsrelevante Messwerte zu erfassen. Dazu werden insbesondere Drehmomente von rotierenden Wellen gemessen, bei denen die Drehmomentaufnehmer synchron mit der Welle umlaufen und das durch die Welle übertragene Drehmoment erfassen. Hierfür werden meist mit Dehnungsmessstreifen bestückte Drehmomentaufnehmer eingesetzt, die von stationären Geräteteilen mit Messenergie versorgt werden müssen und bei denen die gewonnen Messsignale vom rotierenden Drehmomentaufnehmer wieder zu den stationären Geräteteilen übertragen werden. Zur berührungslosen Übertragung derartiger Messwerte und Energie können induktive Telemetriesysteme eingesetzt werden, die über ein rotierendes und ein stationäres Antennenteil verfügen. Dabei ist in jedem gegenüberliegend angeordneten Antennenteil mindestens eine Induktionsspule vorgesehen, die induktiv über einen schmalen Luftspalt miteinander gekoppelt sind und so die elektrischen Signale berührungslos übertragen.

Ein derartiges Telemetriesystem ist aus der DE 10 2005 040 794 A1 bekannt, bei dem Messwerte von einem Rotor einer Gasturbine auf einen stationären Geräteteil und die dazu notwendige Energie in umgekehrter Richtung berührungslos übertragen werden. Dazu ist am stationären Geräteteil ein umlaufender u-förmiger Trägerring angeordnet, in dem isoliert eine Statorspule mit 10 Drahtwindungen befestigt ist. Die Drahtwindungen sind dabei in einer Nut angebracht und sind ausserhalb des Trägerrings mit einem Wechselstromgenerator und einer Gleichspannungsquelle verbunden. Der u-förmige Trägerring ist dabei als umlaufender Eisenkern ausgebildet, so dass die darin angeordneten Drahtwindungen der Induktionsspule isoliert angeordnet sein müssen. Axial gegenüberliegend zum Stator ist vor dem Trägerring der Rotor angeordnet. Am radial außen liegenden Rotorrand ist dabei ein auskragender Ringsteg angeflanscht, der koaxial in den Innenbereich des Statorantennenrings eintaucht und einen Rotorantennenring bildet. In der inneren Mantelfläche des Rotorantennenrings ist eine Induktionsspule als Rotorspule in einer rechteckförmigen Nut eingelassen, die der Statorspule beabstandet durch einen dünnen Luftspalt gegenübersteht. Die Rotorspule ist mit dem am Rotor befestigten Messwertaufnehmer und einer Messelektronik verbunden, so dass während des Rotorbetriebes die Messsignale und die Messenergie berührungslos übertragbar sind. Da die Induktionsspule bei diesem Telemetriesystem in der inneren Mantelfläche des Rotorantennenrings eingelassen ist, muss sie den Statorantennenring von außen radial umgreifen, was bei axial durchgeführten Messwellensystemen ungünstig ist. Es ist zwar bei Telemetriesystemen bekannt, die Induktionsspule beim Antennenring auch auf der äußeren Mantelfläche anzuordnen und diesen in einem Statorantennenring mit innenliegender Induktionsspule rotieren zu lassen, was aber bei hohen Drehzahlen leicht zu Ablöseerscheinungen zwischen der auf dem Rotorring aufgeklebten rotierenden Induktionsspule führt.

Der Erfindung liegt daher die Aufgabe zugrunde, einen mechanisch hoch belastbaren Rotorantennenring für ein induktives Telemetriesystem zu schaffen, das zur Drehmomentmessung an durchführbaren rotierenden Messwellen einsatzbar und einfach und schnell herstellbar ist.

Diese Aufgabe wird durch die im Patentanspruch 1 und 4 angegebene Erfindung gelöst. Weiterbildungen und vorteilhafte Ausführungsbeispiele der Erfindung sind in den Unteransprüchen angegeben.

Die Erfindung hat den Vorteil, dass durch eine zur inneren Mantelfläche verbreiterte Nut als zur Nutöffnung eine eingeschmolzene Induktionsspule an dem metallenen Trägerring sehr stabil und dauerhaft befestigt werden kann, und daher auch allerhöchstens Zentrifugalkräften und Schwingungsbelastungen standhält, wie es bei Drehmomentmesswellen notwendig ist, die Drehzahlen von mindestens 25.000 bis 35.000 U/min ausführen und dabei ein betriebssicheres Telemetriesystem gewährleisten müssen.

Die Erfindung hat weiterhin den Vorteil, dass durch die in der Nut eingeschmolzene Induktionsspule diese auch bei hohen mechanischen Belastungen nach außen geschützt ist, so dass auch bei leichten Berührungen des Rotorantennenrings mit dem Statorantennenring dies nicht sogleich zu Funktionsstörungen führt.

Bei einer besonderen Ausbildung der Induktionsspule, die zwischen zwei Lagen vorimprägnierter Faserschichten (Prepag-Band) eingegossen ist, besteht der Vorteil, dass dadurch nicht nur die notwendige Befestigungssicherheit bei hohen Drehzahlen gewährleistet wird, sondern gleichzeitig eine sehr einfache und schnelle Herstellung ermöglicht wird.

Die Erfindung wird anhand eines Ausführungsbeispiels, das in der Zeichnung dargestellt ist, näher erläutert. Es zeigen:
- Fig. 1:: eine Schnittdarstellung durch einen Rotorantennenring, und
- Fig. 2:: eine Schnittdarstellung des Antennenringquerschnitts

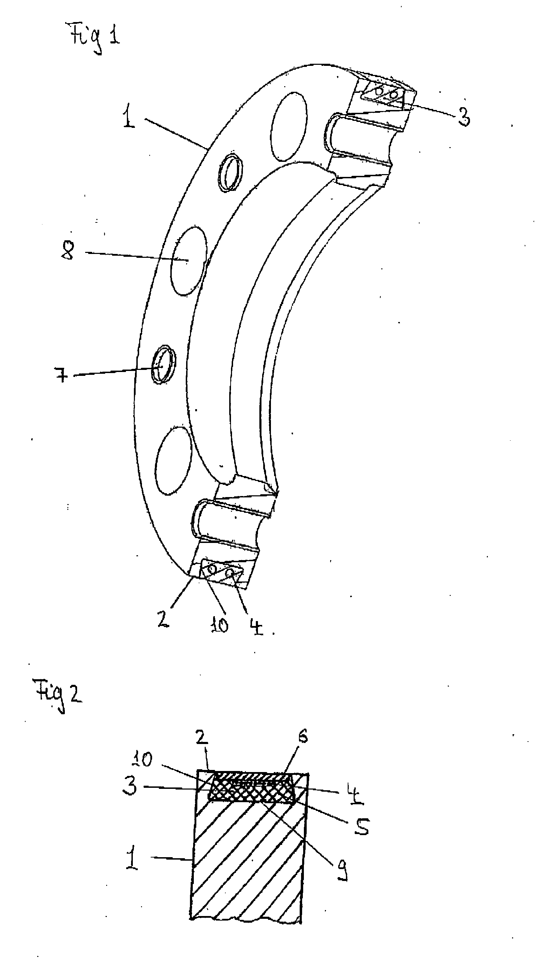

In Fig. 1 der Zeichnung ist ein Rotorantennenring im Schnitt dargestellt, der im wesentlichen aus einem rotierbaren Trägerring 1 aus Metall besteht, in dessen äußerer Mantelfläche 2 in einer schwalbenschwanzförmigen Nut 3 zwischen zwei vorimprägnierten Glasfasergewebebandlagen 5, 6 eine Induktionsspule 4 eingeschmolzen befestigt ist.

Als Trägerring 1 der Induktionsspule 4 ist ein gedrehter Metallring vorzugsweise aus einer mechanisch hoch belasteten Edelstahllegierung vorgesehen. Der Metallring 1 ist zur axialen Verbindung mit verschiedenen Drehmomentaufnehmertypen vorgesehen, die vorzugsweise zur Messung von Nenndrehmomenten von 200 Nm bis 1 kNm ausgelegt sind. Da der Metallring als Träger innerhalb einer Statorantennenanordnung eines Telemetriesystems rotiert, besitzt er vorzugsweise einen Außendurchmesser, der auf dieses abgestimmt ist, von ca. 80 bis 150 mm. Dabei ist der Ringquerschnitt im wesentlichen rechteckig oder quadratisch ausgebildet und mit Kantenlängen von ca. 10 bis 30 mm vorgesehen. Zur Verbindung mit einer Drehmomentmesswelle sind auf der Stirnseite des Trägerrings 1 jeweils sechs axiale Gewinde- 7 und sechs axiale Durchgangsbohrungen 8 angeordnet, durch die der Rotorantennenring mit der rotierenden Messwelle verschraubt wird.

Dabei sind derartige Drehmomentaufnehmer als durchgehende Drehmomentmesswellen ausgebildet, so dass die Induktionsspule 4 vorzugsweise auf der äußeren Mantelfläche 2 des Trägerrings 1 angeordnet wird. Hierbei besteht die Schwierigkeit, dass diese Drehmomentmessung bei Nenndrehzahlen von 25.000 Umdrehungen pro Minute bei einer 1 kN Messwelle und bei einer Nenndrehzahl von ca. 35.000 Umdrehungen pro Minute bei einer Messwellenausführung von 200 Nm erfolgt. Dazu sind Trägeringe 1 von beispielsweise 80 bis 150 mm Durchmesser notwendig, die sich bei derart hohen Drehzahlen durch die enormen Zentrifugalkräfte radial dehnen und schon durch geringste Unwuchten schwingen, so dass sich dadurch die Induktionsspule 4 leicht von der äußeren Mantelfläche 2 des Trägerrings 1 ablösen kann. Deshalb ist die Nut 3 zur Aufnahme der Induktionsspule 4 erfindungsgemäß in einer schwalbenschwanzförmigen Nut 3 befestigt. Dies bewirkt bei hohen Fliehkräften durch die schrägen Nutwände 10 eine Querverpressung der eingeschmolzenen Induktionsspule 4, dass ein Herauswandern und Lösen dieser entgegensteht. Dies wird erfindungsgemäß noch durch die besondere Befestigungsart der Induktionsspule 3 verbessert, so dass dieser Rotorantennenring Drehzahlbelastungen bis 50.000 Umdrehungen pro Minute dauerhaft standhält.

Die besondere Befestigungsart der Induktionsspule 4 in der schwalbenschwanzfärmigen Nut 3 ist im einzelnen aus dem Schnittbild in Fig. 2 der Zeichnung ersichtlich. Dazu wird zur Befestigung zunächst auf eine innere Mantelfläche 9 der Nut 3 eine Grundwicklung 5 eines vorimprägnierten glasfaserverstärkten Gewebebandes (Prepreg-Band) in den auf 150°C erhitzten Metallring 1 vorzugsweise mit hoher Zugkraft aufgewickelt wird, so dass sich das Gewebeband mit der inneren Mantelfläche 9 des Trägerrings 1 klebend verbindet. Diese Grundwicklung 5 wirkt für die nachfolgende Induktionsspule 4 gleichzeitig gegenüber dem Metallring 1 elektrisch isolierend, so dass eine weitere Isolationsschicht zwischen dem Kupferdraht der Induktionsspule 4 und dem Trägerring 1 entbehrlich ist.

Auf diese angeschmolzene Grundwicklung 5 wird dann die Induktionsspule 4 in Form einer Kupferdrahtwicklung mit etwa 100 bis 200 umlaufenden Windungen gewickelt. Darauf wird dann eine weitere Schicht mehrerer Lagen des glasfaserverstärkten, vorimprägnierten Gewebebandes in 150°C erhitztem Zustand als Abdeckwicklung 6 aufgewickelt. Dabei wird die Abdeckwicklung 6 in einer Stärke aufgetragen, dass die Nut 3 zur äußeren Mantelfläche 2 mindestens plan abgedeckt ist. Ist dies nicht gewährleistet, so kann bei einer besonderen Ausbildung dieses Verfahrens die Nut 3 auch noch mit einem Epoxydharz unter Vakuum vergossen werden.

Danach wird das Ganze zur Polymerisierung einen bestimmten Zeitraum von vorzugsweise 60 Minuten in einem Ofen auf konstanter Temperatur (z.B. 150°C) gehalten. Die so verschmolzenen Wicklungen (5, 6) werden anschließend nach dem Aushärten auf der äußeren Mantelfläche 2 plan abgedreht, so dass eine feste mechanisch belastbare Verbindung zwischen der Induktionsspule 4 und dem Stahlring 1 als Träger erreicht wird. Da ein derartiger Einschmelzvorgang der Induktionsspule 4 durch einen zeitlich begrenzten Erhitzungsvorgang erfolgt, ist ein derartiger Rotorantennenring schnell ausgehärtet und dadurch in kürzester Zeit herstellbar.

Der verwendete Stahlring kann dabei auch aus anderen Metallen bestehen, wenn sie bei den hohen Zentrifugalkräften und Schwingbelastungen keine nennenswerten radialen Verformungen aufweisen, um die Induktionsspule nicht von den Verbindungsflächen innerhalb der Nut 3 zu lösen. In der Praxis hat sich dabei bisher auch ein Metallring 1 aus Aluminium oder Titan bewehrt. Als geeignete Nut 3 ist nicht nur eine schwalbenschwanzförmige Ausbildung denkbar, sondern alle Formgebungen deren Breite an der inneren Mantelfläche 9 größer ist als die Nutbreite an der äußeren Mantelfläche 2. Dabei haben sich in der Praxis Nutbreiten an der inneren Mantelfläche von 6 bis 11 mm und Nuttiefen von 2 bis 5 mm als vorteilhaft erwiesen.

## Patentansprüche

1. Rotorantennenring für ein Telemetriesystem zur Messwert-und Messenergieübertragung zwischen einem stationären Antennenteil und einem rotierbaren Messwertaufnehmer, der aus einem metallenen Trägerring (1) mit einer Nut (3) und einer darin angeordneten Induktionsspule (4) besteht, der an dem rotierbaren Messwertaufnehmer befestigbar ist, **dadurch gekennzeichnet, dass** der Trägerring (5) aus einem kreisrunden einteiligen Metallring besteht, in dessen äußerer Mantelfläche (2) eine umlaufende, sich radial nach innen verbreiternde Nut (3) eingelassen ist, in die zwischen zwei Wicklungslagen (6, 7) eines vorimprägnierten oder umgossenen Kunststoff- oder Glasfasergewebebandes (Prepreg-Band) die Induktionsspule (4) eingeschmolzen ist.

2. Rotorantennenring nach Anspruch 1, **dadurch gekennzeichnet, dass** die Nut (3) schwalbenschwanzförmig ausgebildet ist.

3. Rotorantennenring nach Anspruch 1 oder 2, **dadurch gekennzeichnet, dass** die induktionsspule (4) aus einer Wicklung mit 1 bis 200 Windungen Kupferdraht besteht, die zwischen einer Grundwicklung (5) eines vorimprägnierten Glasfasergewebebandes und einer Abdeckwicklung (6) aus ebenfalls einem vorimprägnierten Glasfasergewebeband so eingeschmolzen ist, dass die Nut (3) vollständig und plan zur äußeren Mantelfläche (2) ausgefüllt ist.

4. Verfahren zur Herstellung eines Rotorantennenrings nach einem der Ansprüche 1 bis 3, **dadurch gekennzeichnet, dass** der kreisrunde Metallring 1 und die darin eingelassene schwalbenschwanzförmige Nut (3) durch einen mechanischen Drehvorgang hergestellt wird, vorbei der Trägerring (1) dann auf 130 bis 180°C erhitzt und dabei in die Nut (3) ein vorimprägniertes Glasfasergewebeband (Prepreg-Band) als Grundwicklung (5) eingewickelt und im erhitzten und angeschmolzenen Zustand darüber eine Kupferdrahtwicklung gewickelt und darüber im erhitzten Zustand eine weitere vorimprägnierte Glasfasergewebeband (Prepreg-Band) als Abdeckwicklung (6) bis zur Ausfüllung der Nut (3) gewickelt und alles miteinander verschmolzen wird und der so hergestellte Rotorantennenring für einen vorgegebenen Zeitraum in einem Ofen bei konstanter Temperatur zur Polymerisierung der vorimprägnierten Glasfaserwicklungen (5, 6) behandelt wird.
